# EUROPÄISCHE PATENTSCHRIFT

(11) **EP 4 140 936 B1**
(45) Veröffentlichungstag und Bekanntmachung des Hinweises auf die Patenterteilung: **19.06.2024**
(21) Anmeldenummer: 22188814.2
(22) Anmeldetag: 04.08.2022
(51) Int. Cl.: B66F 9/075, B62B 3/06, B66F 9/06, B66F 9/065

(54) **HUBWAGEN**
JACK LIFT
CHARIOT ÉLÉVATEUR

(30) Priorität: 05.08.2021 DE 202021104180 U
(43) Veröffentlichungstag der Anmeldung: 01.03.2023
(73) Patentinhaber: Laudenbach, Franz, 78559 Gosheim (DE)
(72) Erfinder: Laudenbach, Franz, 78559 Gosheim (DE)
(74) Vertreter: Patentanwälte Ruff, Wilhelm, Beier, Dauster & Partner mbB

(56) Entgegenhaltungen:
- WO-A1-2018/211481
- US-B2- 7 789 175
- US-B2- 9 908 549

## Beschreibung

Die Erfindung betrifft einen Hubwagen mit den Merkmalen des Oberbegriffs des Anspruchs 1.

Ein derartiger Hubwagen ist aus der US 7 789 175 B2 bekannt.

Ein weiterer Hubwagen ist aus der DE 10 2008 063 593 A1 in Form eines Niederhubwagens bekannt. Der bekannte Hubwagen weist einen Antriebsteil und einen relativ zu dem Antriebsteil mittels einer Hubeinrichtung vertikal beweglichen Lastteil auf. Die Hubeinrichtung ist an dem Antriebsteil angeordnet und weist eine rotatorisch stellbewegliche Gewindespindel auf, die gewindebeweglich mit einer Spindelmutter zusammenwirkt, über welche die Gewindespindel mittelbar mit dem Lastteil wirkverbunden ist. Der Antriebsteil weist zudem eine um eine vertikale Lenkachse schwenkbewegliche Lenkrolle auf. Der bekannte Hubwagen wird mittels einer handgeführten Deichsel gelenkt, die um die Lenkachse schwenkbar an dem Antriebsteil angeordnet ist und einends an der Lenkrolle angreift.

Aufgabe der Erfindung ist es, einen Hubwagen der eingangs genannten Art bereitzustellen, der Vorteile gegenüber dem Stand der Technik bietet und gleichzeitig einen möglichst einfachen Aufbau aufweist sowie kostengünstig herstellbar ist.

Diese Aufgabe wird durch das Bereitstellen eines Hubwagens mit den Merkmalen des Anspruchs 1 gelöst. Durch die erfindungsgemäße Lösung kann insbesondere auf eine handgeführte Deichsel zum Lenken des Hubwagens verzichtet werden. Anstelle einer solchen handgeführten Deichsel ist die elektrisch betriebene Lenkeinrichtung vorgesehen. Die Lenkbewegung wird mittels der um die Lenkachse rotatorisch stellbeweglichen Lenkwelle auf die Lenkrolle übertragen. Zu diesem Zweck ist die Lenkwelle mit der Lenkrolle wirkverbunden, so dass die rotatorische Stellbewegung der Lenkwelle eine schwenkbewegliche Lenkbewegung der Lenkrolle bewirkt. Erfindungsgemäß ist die Lenkeinrichtung elektrisch betrieben. Dies sinngemäß entsprechend zu der Hubeinrichtung. Dass sowohl die Hubeinrichtung als auch die Lenkeinrichtung elektrisch betrieben sind, ermöglicht grundsätzlich eine Verwendung baugleicher Antriebskomponenten. Hierdurch kann der konstruktive Aufbau des Hubwagens vereinfacht werden. Damit einhergehend wird eine kostengünstige Herstellung ermöglicht. Bei einer Ausgestaltung ist die Gewindespindel relativ zu dem Antriebsteil translatorisch feststehend, rotatorisch stellbeweglich und wirkt mit einer translatorisch stellbeweglichen Gewindemutter zusammen, die mit dem Lastteil verbunden ist. Bei einer weiteren Ausgestaltung ist die Gewindespindel relativ zu dem Antriebsteil rotatorisch feststehend, translatorisch stellbeweglich und wirkt und mit einer rotatorisch beweglichen Spindelmutter zusammen. Die letztgenannte Ausgestaltung ist bevorzugt. Sowohl die Hub- als auch die Lenkachse sind vertikal ausgerichtet und somit zueinander parallel orientiert. Vorzugsweise sind die Hub- und die Lenkachse koaxial.

Weiter gemäß der Erfindung ist die Lenkeinrichtung vertikal unterhalb der Hubeinrichtung an dem Antriebsteil angeordnet, wobei die Gewindespindel und die Lenkwelle koaxial orientiert sind, und wobei die Lenkwelle eine nach oben offene Aufnahmeaussparung aufweist, in welche ein unteres Stirnende der Gewindespindel in unterschiedlichen translatorischen Stellpositionen der Gewindespindel unterschiedlich weit axial eingetaucht ist. Diese besonders bevorzugte Ausgestaltung der Erfindung ermöglicht insbesondere eine besonders kompakte Bauweise. Um die kompakte Bauweise zu erreichen, sind die Hub- und die Lenkeinrichtung, vereinfacht ausgedrückt, übereinandergestapelt an dem Antriebsteil montiert. Dabei ist die Lenkeinrichtung unterhalb der Hubeinrichtung angeordnet. Die Gewindespindel ist bei dieser Ausgestaltung relativ zu dem Antriebsteil zwischen unterschiedlichen Stellpositionen translatorisch stellbeweglich. Die unterschiedlichen translatorischen Stellpositionen der Gewindespindel korrespondieren mit unterschiedlichen Hubstellungen des Lastteils entlang der Hubachse. Der Lastteil ist entlang der vertikalen Hubachse zwischen einer oberen Endlage und einer unteren Endlage hubbeweglich. In der oberen Endlage ist der Lastteil relativ zu dem Antriebsteil maximal angehoben. In der unteren Endlage ist der Lastteil relativ zu dem Antriebsteil maximal abgesenkt. In der oberen Endlage nimmt die Gewindespindel eine obere Stellposition ein. In der unteren Endlage nimmt die Gewindespindel eine untere Stellposition ein. In der unteren Stellposition ist das untere Stirnende der Gewindespindel axial entlang der Hubachse in die Aufnahmeaussparung der Lenkwelle eingetaucht. In der oberen Stellposition ist die Gewindespindel nicht oder wenigstens weniger weit in die Aufnahmeaussparung eingetaucht. Die koaxiale Anordnung der Gewindespindel und der Lenkwelle sowie die nach oben offene Aufnahmeaussparung der Lenkwelle tragen zusätzlich zu der besonders kompakten Bauweise bei.

In weiterer Ausgestaltung der Erfindung bildet die Hubeinrichtung eine in und/oder an einem ersten Gehäuse vormontierte erste Baugruppe, und die Lenkeinrichtung bildet eine in und/oder an einem zweiten Gehäuse vormontierte zweite Baugruppe. Hierdurch können der Aufbau des Hubwagens weiter vereinfacht und zusätzliche Kosten bei der Herstellung eingespart werden. Die erste Baugruppe umfasst das erste Gehäuse. Die zweite Baugruppe umfasst das zweite Gehäuse. Vorzugsweise ist die Gewindespindel in dem ersten Gehäuse vormontiert. Weiter vorzugsweise ist die Lenkwelle in dem zweiten Gehäuse vormontiert. Vorzugsweise weist das erste Gehäuse wenigstens einen Flansch zur Verbindung mit dem zweiten Gehäuse und/oder einem hierfür vorgesehenen Abschnitt des Antriebteils auf. Entsprechendes gilt sinngemäß für das zweite Gehäuse. Bei einer bevorzugten Ausgestaltung weist das erste Gehäuse einen Motorflansch auf, der zum Anflanschen eines Elektromotors eingerichtet ist. Entsprechendes gilt sinngemäß für das zweite Gehäuse.

In weiterer Ausgestaltung der Erfindung ist eine Unterseite des ersten Gehäuses auf einer Oberseite des zweiten Gehäuses abgestützt. Hierdurch können ein weiter vereinfachter Aufbau und ein weiter verringertes Bauvolumen erreicht werden. Das zweite Gehäuse ist unmittelbar an einem hierfür vorgesehenen Abschnitt des Antriebteils abgestützt. Vorzugsweise ist das erste Gehäuse lediglich mittelbar, nämlich über das zweite Gehäuse, auf dem Antriebteil abgestützt. Hierdurch kann auf eine gesonderte Abstützung des ersten Gehäuses auf und/oder an dem Antriebteil verzichtet werden. Die Unterseite des ersten Gehäuses und die Oberseite des zweiten Gehäuses sind vorzugsweise lösbar miteinander verbunden. Die entsprechende Verbindung kann form- und/oder kraftschlüssig sein. Bevorzugt ist eine Schraubverbindung an hierfür vorgesehenen Flanschflächen der Ober- bzw. Unterseite.

In weiterer Ausgestaltung der Erfindung sind das erste Gehäuse und das zweite Gehäuse wenigstens im Wesentlichen, vorzugsweise vollständig, baugleich. Wenigstens im Wesentlichen baugleich meint, dass das erste Gehäuse und das zweite Gehäuse hinsichtlich ihrer Abmessungen und/oder Formgebung wenigstens überwiegend übereinstimmen. Hierdurch können die Herstellung maßgeblich vereinfacht und zusätzliche Kosten eingespart werden.

In weiterer Ausgestaltung der Erfindung weist die Hubeinrichtung einen ersten Elektromotor auf und die Lenkeinrichtung weist einen zweiten Elektromotor auf, wobei der erste Elektromotor und der zweite Elektromotor an einer selben Seite, vorzugsweise einer in Längsrichtung des Hubwagens hinten liegenden Hinterseite, des Antriebsteils angeordnet sind. Die Anordnung der beiden Elektromotoren auf derselben Seite des Antriebsteils vereinfacht die Montage und Wartung des Hubwagens. Sofern die beiden Elektromotoren an der Hinterseite des Antriebsteils angeordnet sind, wird eine in Hochrichtung und in Querrichtung kompakte Bauweise unterstützt.

In weiterer Ausgestaltung der Erfindung sind der erste Elektromotor und der zweite Elektromotor wenigstens im Wesentlichen, vorzugsweise vollständig, baugleich. Wenigstens im Wesentlichen baugleich meint, dass der erste Elektromotor und der zweite Elektromotor wenigstens überwiegend übereinstimmende technische Spezifikationen aufweisen. Als solche zu nennen sind beispielsweise eine Nennleistung, eine Nenndrehzahl, ein Nenndrehmoment, ein Lochbild etwaiger Flanschflächen, die Art der vorhandenen elektrischen und/oder signaltechnischen Steckverbindungen und Schnittstellen oder dergleichen. Diese Ausgestaltung der Erfindung verringert die Anzahl der erforderlichen unterschiedlichen Antriebskomponenten. Dies geht mit einem weiter vereinfachten Aufbau und zusätzlichen Kosteneinsparungen einher. Bei einer besonders bevorzugten Ausgestaltung der Erfindung sind die beiden Elektromotoren vollständig baugleich, so dass lediglich ein spezifischer Motortyp für Montage- und Wartungszwecke des Hubwagens vorgehalten werden muss.

In weiterer Ausgestaltung der Erfindung weist die Hubeinrichtung ein der Gewindespindel vorgeschaltetes erstes Schneckengetriebe mit einer ersten Schneckenwelle und einem ersten Schneckenrad auf, und die Lenkeinrichtung weist ein der Lenkwelle vorgeschaltetes zweites Schneckengetriebe mit einer zweiten Schneckenwelle und einem zweiten Schneckenrad auf. Das erste Schneckengetriebe dient einer Übersetzung einer Antriebskraft und/oder -bewegung auf die Gewindespindel. Entsprechendes gilt sinngemäß im Hinblick auf das zweite Schneckengetriebe. Bei einer bevorzugten Ausgestaltung wirkt das erste Schneckenrad unmittelbar auf die Gewindespindel und das zweite Schneckenrad wirkt unmittelbar auf die Lenkwelle. Bei einer weiteren Ausgestaltung wirkt die erste Schneckenwelle unmittelbar auf die Gewindespindel und die zweite Schneckenwelle wirkt unmittelbar auf die Lenkwelle. Vorzugsweise ist das erste Schneckengetriebe und/oder das zweite Schneckengetriebe selbsthemmend. Hierdurch kann auf eine Feststelleinrichtung zum Feststellen einer eingenommenen Hubstellung des Lastteils und/oder einer eingenommenen Lenkstellung der Lenkrolle verzichtet werden. Dies ermöglicht einen weiter vereinfachten Aufbau. Bei einer Ausgestaltung der Erfindung ist das erste Schneckengetriebe lediglich teilweise selbsthemmend und die Hubeinrichtung weist eine Feststelleinrichtung zum Feststellen der eingenommenen Hubstellung des Lastteils auf. Die Feststelleinrichtung kann beispielsweise eine Elektrobremse sein, die einem Elektromotor der Hubeinrichtung zugeordnet sein kann.

In weiterer Ausgestaltung der Erfindung sind das erste Schneckengetriebe und das zweite Schneckengetriebe wenigstens im Wesentlichen, vorzugsweise vollständig, baugleich. Wenigstens im Wesentlichen baugleich meint, dass das erste Schneckengetriebe und das zweite Schneckengetriebe im Hinblick auf ihre Dimensionen, Verzahnungsparameter, Orientierung der Bewegungsachsen und dergleichen wenigstens überwiegend übereinstimmen. Dies bildet die Grundlage für die Verwendung identischer oder wenigstens nahezu identischer Bauteile für die beiden Schneckengetriebe.

In weiterer Ausgestaltung der Erfindung sind die erste Schneckenwelle und die zweite Schneckenwelle parallel orientiert und/oder das erste Schneckenrad und das zweite Schneckenrad sind koaxial orientiert. Eine solche Ausrichtung der beiden Schneckenwellen und/oder der beiden Schneckenräder unterstützt eine besonders kompakte Bauweise.

In weiterer Ausgestaltung der Erfindung weisen die erste Schneckenwelle und die zweite Schneckenwelle identische Verzahnungsparameter auf und/oder das erste Schneckenrad und das zweite Schneckenrad weisen identische Verzahnungsparameter auf. Hierdurch können eine weiter vereinfachte Herstellung und damit einhergehend zusätzliche Kosteneinsparungen erreicht werden.

In weiterer Ausgestaltung der Erfindung weist das erste Schneckenrad ein Innengewinde auf, das gewindebeweglich mit einem Außengewinde der Gewindespindel zusammenwirkt. Folglich fungiert das erste Schneckenrad zusätzlich als Spindelmutter für das erste Schneckengetriebe. Bei einer Ausgestaltung ist das Innengewinde spanend in einen Innendurchmesser des ersten Schneckenrads eingebracht. Bei einer weiteren Ausgestaltung ist das Innengewinde an einem Bauteil ausgebildet, das separat von dem ersten Schneckenrad gefertigt und hiernach fest mit diesem zusammengefügt ist.

In weiterer Ausgestaltung der Erfindung sind das zweite Schneckenrad und die Lenkwelle koaxial orientiert und drehmomentfest miteinander verbunden. Bei einer Ausgestaltung bilden das zweite Schneckenrad und die Lenkwelle eine einstückige Komponente. Bei einer weiteren Ausgestaltung ist das zweite Schneckenrad separat von der Lenkwelle gefertigt und beispielsweise mittels einer Passfeder- und/oder Schrumpfverbindung drehmomentfest mit einem Außenumfang der Lenkwelle zusammengefügt.

In weiterer Ausgestaltung der Erfindung ist eine Batterie an dem Antriebsteil angeordnet und zur Versorgung der Hubeinrichtung und der Lenkeinrichtung mit elektrischer Betriebsenergie eingerichtet. Dies ermöglicht einen kabellosen elektrischen Betrieb des Hubwagens. Die Batterie ist vorzugsweise ein Akkumulator. Weiter vorzugsweise ist die Batterie werkzeuglos lösbar an dem Antriebsteil angeordnet, beispielsweise in einem hierfür vorgesehenen Batteriefach. Hierdurch kann die Batterie in einem entladenen Zustand schnell und unaufwändig gegen eine aufgeladene Ersatzbatterie getauscht werden.

In weiterer Ausgestaltung der Erfindung ist eine Steuereinrichtung an dem Antriebsteil angeordnet, wobei die Steuereinrichtung zum Empfangen von Steuersignalen eingerichtet ist, und wobei die Steuereinrichtung zum Ansteuern der Hubeinrichtung und der Lenkeinrichtung in Abhängigkeit der empfangenen Steuersignale eingerichtet ist. Die auf diese Weise eingerichtete Steuereinrichtung ermöglicht einen autonomen oder wenigstens teilweise autonomen Betrieb des Hubwagens. Die Steuersignale können ausgehend von einer Steuerzentrale manuell oder computergestützt an die Steuereinrichtung übermittelt werden. Die Übermittlung erfolgt vorzugsweise drahtlos.

In weiterer Ausgestaltung der Erfindung ist die Lenkrolle mit einem Nabenmotor versehen, insbesondere wobei der Nabenmotor mittels der Batterie mit elektrischer Betriebsenergie versorgt und/oder mittels der Steuereinrichtung angesteuert ist. Der Nabenmotor dient als Fahrantrieb zum Unterstützen und/oder Antreiben einer Fahrbewegung des Hubwagens. Hierdurch wird ein manuelles Ziehen und/oder Schieben des Hubwagens erleichtert oder vollständig überflüssig. Bei einer bevorzugten Ausgestaltung wird der Nabenmotor mittels der Batterie mit elektrischer Betriebsenergie versorgt und mittels der Steuereinrichtung angesteuert. Dies erlaubt einen vollständig autonomen Betrieb des Hubwagens. Bei einer Ausgestaltung weist der Nabenmotor eine Feststelleinrichtung auf, mittels derer der Hubwagen gegen ein unbeabsichtigtes Wegrollen gesichert werden kann. Beispielsweise ist die Feststelleinrichtung eine elektrisch betriebene Parkbremse oder dergleichen.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in schematischer Perspektivdarstellung eine Ausführungsform eines erfindungsgemäßen Hubwagens mit einer elektrisch betriebenen Hubeinrichtung und einer elektrisch betriebenen Lenkeinrichtung,
- Fig. 2: in schematischer Perspektivdarstellung eine Detailansicht der Hub- und der Lenkeinrichtung in einer schräg von oben nach unten gerichteten Blickrichtung,
- Fig. 3: die Detailansicht nach Fig. 2 in einer schräg von unten nach oben gerichteten Blickrichtung,
- Fig. 4: eine schematische Seitenansicht der Hubeinrichtung und der Lenkeinrichtung,
- Fig. 5: eine schematische Längsschnittdarstellung entlang einer Schnittlinie B-B gemäß Fig. 4,
- Fig. 6: eine schematische Querschnittsdarstellung der Hubeinrichtung entlang einer Schnittlinie A-A gemäß Fig. 4,
- Fig. 7: eine schematische Querschnittsdarstellung der Lenkeinrichtung entlang einer Schnittlinie C-C gemäß Fig. 4,

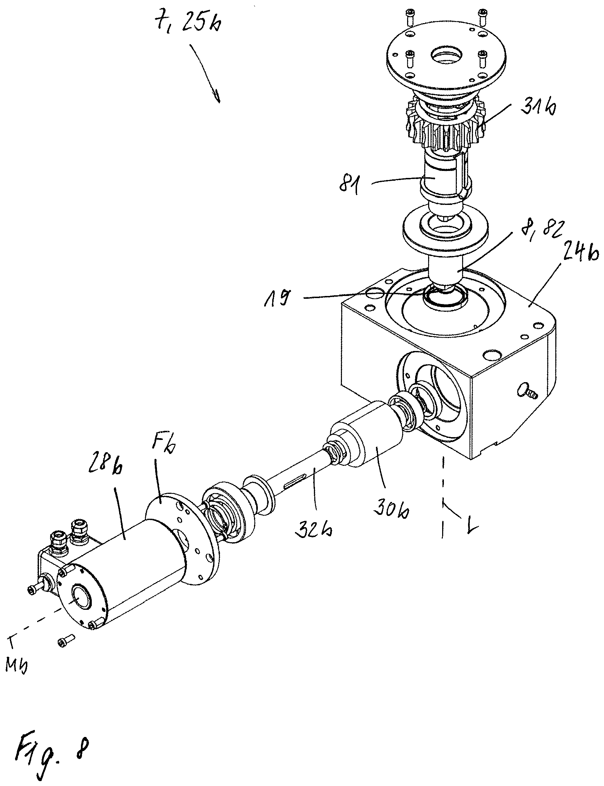

- Fig. 8: eine perspektivische Explosionsdarstellung der Lenkeinrichtung und

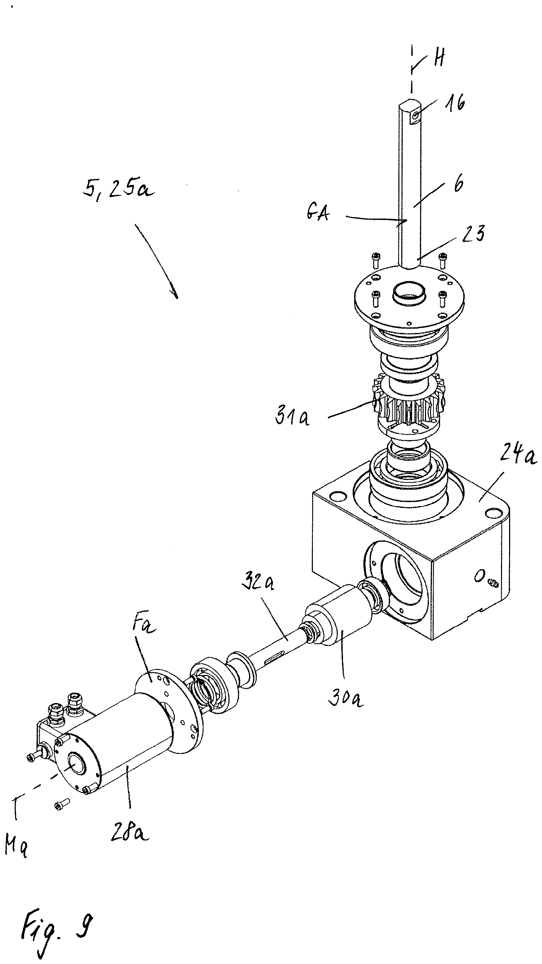

- Fig. 9: eine perspektivische Explosionsdarstellung der Hubeinrichtung.

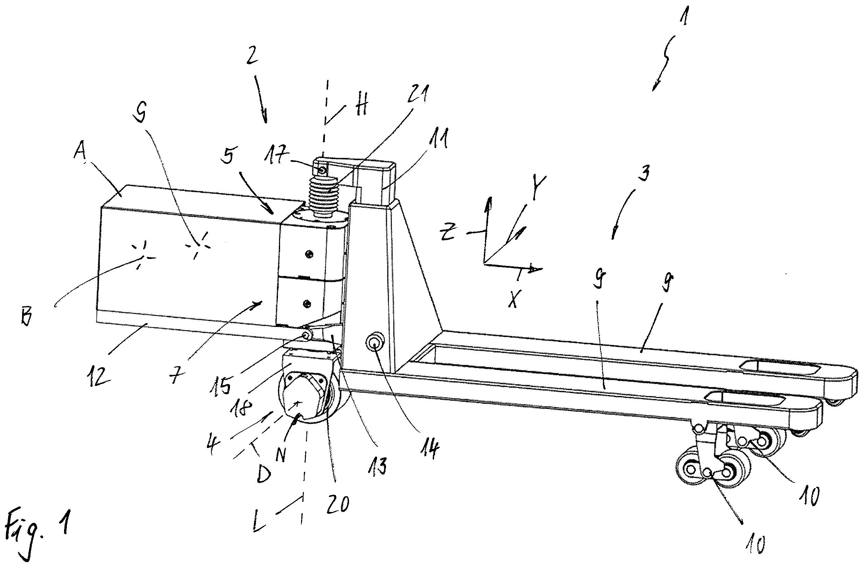

Gemäß Fig. 1 ist ein Hubwagen 1 zum Transport von Lasten auf ebenem Untergrund vorgesehen. Der Hubwagen 1 ist vorliegend ein Niederhubwagen. Die zu transportierenden Lasten können beispielsweise beladene Paletten, Gitterboxen, Kleinteilebehälter oder dergleichen sein.

Der Hubwagen 1 weist einen Antriebsteil 2 und einen Lastteil 3 auf. Der Antriebsteil weist eine um eine vertikale Lenkachse L schwenkbewegliche Lenkrolle 4 auf. Der Lastteil 3 ist relativ zu dem Antriebsteil 2 entlang einer vertikalen Hubachse H hubbeweglich.

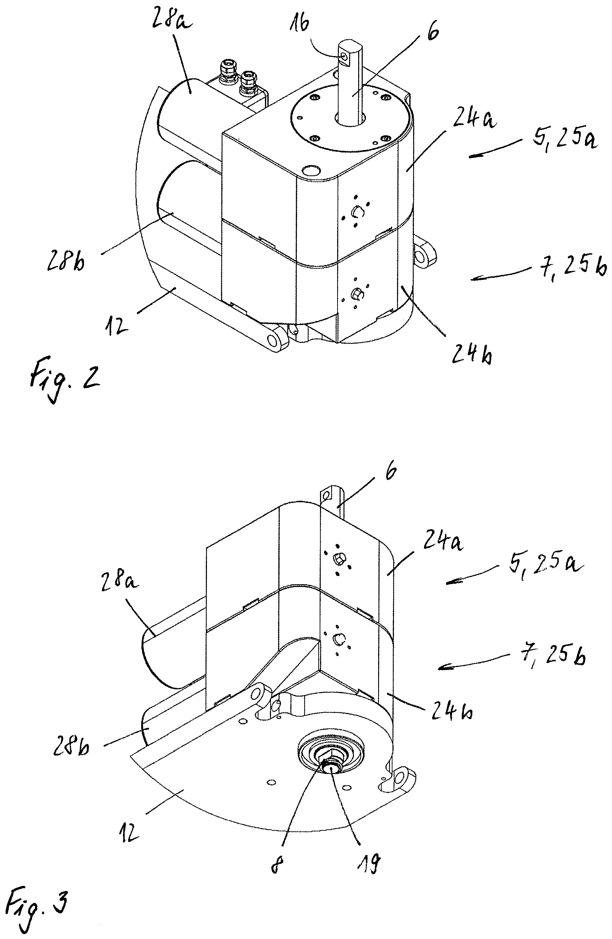

Weiter weist der Hubwagen 1 eine an dem Antriebsteil 2 angeordnete elektrisch betriebene Hubeinrichtung 5 auf. Die Hubeinrichtung 5 weist eine entlang der Hubachse H translatorisch stellbewegliche Gewindespindel 6 auf (siehe Fig. 2). Die Gewindespindel 6 ist zur angetriebenen Hubbewegung des Lastteils 3 mit demselben wirkverbunden.

Der Hubwagen 1 weist zudem eine elektrisch betriebene Lenkeinrichtung 7 auf. Die Lenkeinrichtung 7 ist an dem Antriebsteil 2 angeordnet und weist eine rotatorisch um die Lenkachse L stellbewegliche Lenkwelle 8 auf (siehe Fig. 3), die zur angetriebenen Schwenkbewegung der Lenkrolle 4 mit derselben wirkverbunden ist.

Der Lastteil 3 weist bei der gezeigten Ausführungsform zwei Lastarme 9 auf, die auch als Zinken bezeichnet werden können. Die Lastarme 9 sind auf eine dem Fachmann grundsätzlich bekannte Weise entlang einer Längsachse X des Hubwagens 1 parallel längserstreckt. Die Lastarme 9 sind um einen nicht näher bezeichneten Abstand in Querrichtung Y des Hubwagens 1 voneinander beabstandet. Weiter weist der Lastteil 3 zwei Lastrolleneinheiten 10 auf. Diese sind in einem in Längsrichtung X vorderen Bereich der Lastarme 9 angeordnet und dienen einer rollbeweglichen Abstützung der Lastarme 9 auf dem Untergrund. Die Lastrolleneinheiten 10 sind auf eine dem Fachmann grundsätzlich bekannte Weise relativ zu dem jeweiligen Lastarm 9 schwenk- und/oder gelenkbeweglich. Die besagte Beweglichkeit gewährleistet, dass die Lastarme 9 unabhängig von einer jeweiligen Hubstellung des Lastteils 3 entlang der Hubachse H stets zuverlässig und lastübertragend auf dem Untergrund abgestützt sind.

In einem in Längsrichtung X hinteren Bereich weist der Lastteil 3 einen Lastrahmen 11 auf. Der Lastrahmen 11 ist einends auf nicht näher gezeigte Weise fest mit den Lastarmen 9 verbunden, ragt ausgehend von den Lastarmen 9 in Hochrichtung Z des Hubwagens 1 längserstreckt nach oben und ist andernends auf noch näher beschriebene Weise mit der Hubeinrichtung 5 wirkverbunden.

Obige Ausführungen verdeutlichen, dass der Lastteil 3 eine dem Fachmann grundsätzlich bekannte Gestaltung und Funktion aufweist, so dass weitere diesbezügliche Erläuterungen entbehrlich sind.

Der Antriebsteil 2 weist bei der gezeigten Ausführungsform eine Grundplatte 12 auf, an welcher die weiteren Bauteile und/oder Komponenten des Antriebteils 2 montiert oder jedenfalls abgestützt sind. Die Grundplatte 12 ist gelenkbeweglich mit dem Lastrahmen 11 verbunden. Zu diesem Zweck sind vorliegend zwei in Querrichtung Y voneinander beabstandet angeordnete Lenker 13 vorhanden, wobei anhand Fig. 1 lediglich einer der beiden Lenker 13 ersichtlich ist. Die Lenker 13 sind jeweils zwischen einem ersten Ende und einem zweiten Ende längserstreckt. Das erste Ende ist um eine erste Gelenkachse 14 gelenkbeweglich an dem Lastrahmen 11 gelagert. Das zweite Ende ist um eine zweite Gelenkachse 15 gelenkbeweglich an der Grundplatte 12 gelagert. Die beiden Gelenkachsen 14, 15 sind jeweils parallel zur Querrichtung Y orientiert. Die vorbeschriebene Gelenkbeweglichkeit zwischen der Grundplatte 12 und dem Lastrahmen 11 dient einem Ausgleich der Relativbewegung zwischen dem Lastteil 3 und dem Antriebsteil 2 bei der Hubbewegung des Lastteils 3 entlang der Hubachse H. Im Übrigen ist die Lenkrolle 4 an einer Unterseite der Grundplatte 12 um die Lenkachse L schwenkbeweglich abgestützt.

Vorliegend ist die Hubachse H parallel zur Hochrichtung Z längserstreckt. Die Lenkachse L ist parallel zur Hochrichtung Z längserstreckt. Die Hubachse H und die Lenkachse L sind koaxial orientiert.

Zur Kraft- und Bewegungsübertragung zwischen der Hubeinrichtung 5 und dem Lastteil 3 ist eine Bolzenverbindung 16, 17 zwischen der Gewindespindel 6 und dem Lastrahmen 11 vorhanden. Die Bolzenverbindung 16, 17 weist eine Bolzenaufnahme 16 und einen Querbolzen 17 auf. Die Bolzenaufnahme 16 ist an einem in Hochrichtung Z oberen Stirnendbereich der Gewindespindel 6 angeordnet. Der Querbolzen 17 ist an einem der Gewindespindel 6 zugewandten Stirnendbereich des Lastrahmens 11 angeordnet. Vorliegend ist die Gewindespindel 6 mittels eines Faltenbalgs 21 vor äußeren Einflüssen geschützt.

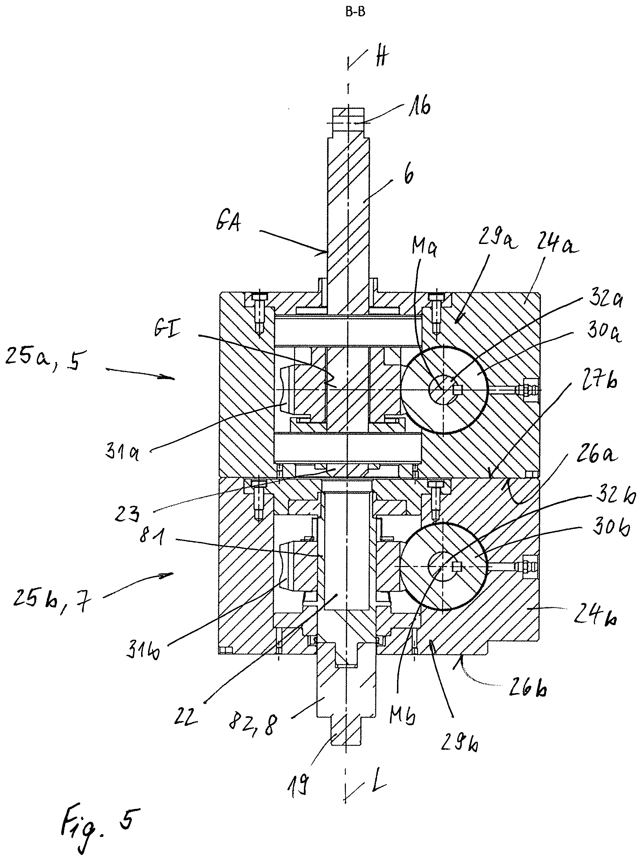

Zur Übertragung der Lenkbewegung und Lenkkraft auf die Lenkrolle 4 greift die Lenkwelle 8 um die Lenkachse L drehmomentfest an einem Rollenträger 18 der Lenkrolle 4 an. Der Rollenträger 18 ist auf eine dem Fachmann grundsätzlich bekannte Weise bügelförmig gestaltet und weist an einem oberen Stirnende eine nicht näher ersichtliche Zapfenaufnahme zur drehmomentfesten Aufnahme eines Zapfens 19 der Lenkwelle 8 auf (siehe Fig. 5). Die Lenkrolle 4 weist zudem einen Rollenkörper 20 auf, der um eine quer orientierte Drehachse D drehbeweglich an dem Rollenträger 18 gelagert ist. Dabei sind der Aufbau und die Funktionsweise der Lenkrolle 4 jedenfalls im Hinblick auf den Rollenträger 18 und den Rollenkörper 20 dem Fachmann grundsätzlich bekannt.

In der anhand Fig. 1 gezeigten Konfiguration des Hubwagens 1 nimmt der Lastteil 3 eine entlang der Hubachse H obere Endlage ein. D. h. der Lastteil 3 ist entlang der Hubachse H maximal angehoben. Die Gewindespindel 6 nimmt hierbei eine obere Stellposition ein. In der oberen Stellposition ist die Gewindespindel 6 maximal entlang der Hubachse H nach oben bewegt. In einer zeichnerisch nicht näher dargestellten unteren Endlage ist der Lastteil 3 entlang der Hubachse H maximal nach unten abgesenkt. In dieser abgesenkten, unteren Endlage nimmt die Gewindespindel 6 eine untere Stellposition ein.

Um eine besonders kompakte Bauweise zu erreichen, ist vorgesehen, dass die Lenkeinrichtung 7 vertikal unterhalb der Hubeinrichtung 5 an dem Antriebsteil 2 angeordnet ist, wobei die Gewindespindel 6 und die Lenkwelle 8 koaxial orientiert sind, und wobei die Lenkwelle 8 eine nach oben offene Aufnahmeaussparung 22 aufweist, in welche ein unteres Stirnende 23 der Gewindespindel 6 in unterschiedlichen translatorischen Stellpositionen der Gewindespindel 6 unterschiedlich weit axial eingetaucht ist (siehe Fig. 5).

In der anhand Fig. 5 gezeigten Konfiguration nimmt die Gewindespindel ihre obere Stellposition ein. Hierbei ist das untere Stirnende 23 entlang der Hubachse H axial aus der Aussparung 22 herausbewegt. In der zeichnerisch nicht näher dargestellten unteren Stellposition ist das untere Stirnende - in Bezug auf die Zeichenebene der Fig. 5 - entlang der Hubachse H nach unten in die Aussparung 22 hinein verlagert.

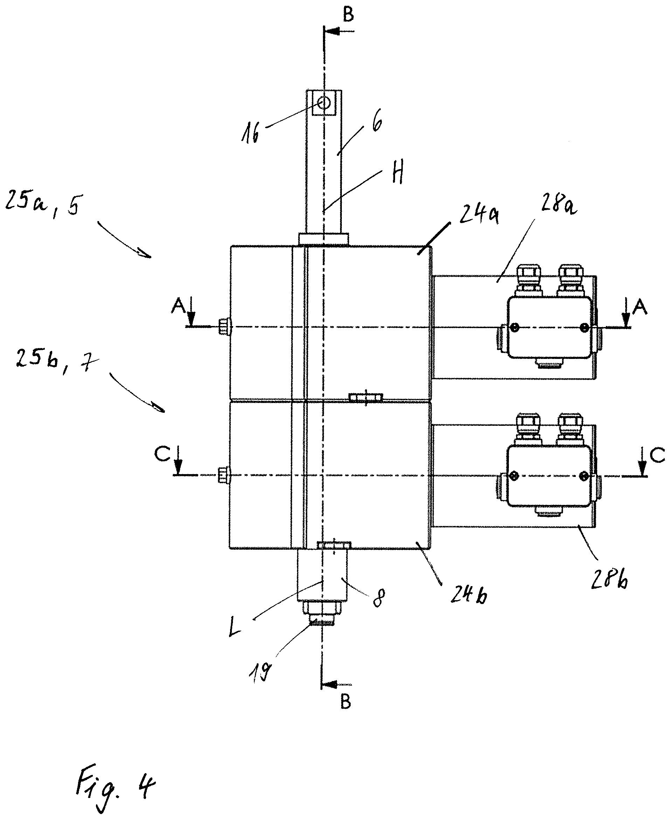

Wie insbesondere anhand der Fig. 2 bis 5 gezeigt ist, sind die Hubeinrichtung 5 und die Lenkeinrichtung 7 bei der gezeigten Ausführungsform in einer besonders vorteilhaften Modulbauweise ausgeführt. Diese Modulbauweise sieht vor, dass die Hubeinrichtung 5 eine in und/oder an einem ersten Gehäuse 24a vormontierte erste Baugruppe 25a bildet. Weiter bildet die Lenkeinrichtung 7 eine in und/oder an einem zweiten Gehäuse 24b vormontierte zweite Baugruppe 25b. Bereits anhand der Fig. 2 bis 5 wird deutlich, dass die beiden Baugruppen 25a, 25b - abgesehen von ihrer unterschiedlichen Funktion und diesbezüglicher konstruktiver Details - wesentliche konstruktive Übereinstimmungen aufweisen. Diese Übereinstimmungen erlauben die Verwendung von Gleichteilen für die Hubeinrichtung 5 einerseits und die Lenkeinrichtung 7 andererseits, so dass die erforderliche Anzahl an unterschiedlichen Bauteilen reduziert werden kann. Dies geht mit einer maßgeblichen Vereinfachung der Herstellung und reduzierten Kosten einher.

Das erste Gehäuse 24a ist in Hochrichtung Z auf dem zweiten Gehäuse 24b abgestützt. Vereinfacht ausgedrückt ist die erste Baugruppe 25a in Hochrichtung Z auf die zweite Baugruppe 25b "gestapelt". Das zweite Gehäuse 24b ist auf der Grundplatte 12 abgestützt. Genauer ausgedrückt, ist eine Unterseite 26a des ersten Gehäuses 24a auf einer Oberseite 27b des zweiten Gehäuses 24b abgestützt. Eine Unterseite 26b des zweiten Gehäuses 24b ist auf der Grundplatte 12 abgestützt. Die Unterseite 26a und die Oberseite 27b können kraft- und/oder formschlüssig lösbar miteinander verbunden sein, beispielsweise mittels lösbar verschraubter Flansche oder dergleichen. Entsprechendes gilt sinngemäß für die Verbindung zwischen der Unterseite 26b und der Grundplatte 12.

Das erste Gehäuse 24a und das zweite Gehäuse 24b sind vorliegend baugleich ausgeführt. Dies jedenfalls im Wesentlichen, so dass lediglich konstruktive Detaillösungen zwischen den beiden Gehäusen 24a, 24b unterschiedlich ausgeführt sind. Beide Gehäuse 24a, 24b weisen vorliegend eine quaderförmige Grundform auf.

Die Gewindespindel 16 ragt entlang der Hubachse H einends vertikal nach oben aus dem ersten Gehäuse 24a. Die Lenkwelle 8 ragt einends entlang der Lenkachse L und vertikal nach unten aus dem zweiten Gehäuse 24b heraus.

Bei der gezeigten Ausführungsform weist die Hubeinrichtung 5 einen ersten Elektromotor 28a auf. Die Lenkeinrichtung 7 weist einen zweiten Elektromotor 28b auf. Der erste Elektromotor 28a dient als Antrieb für die translatorische Stellbewegung der Gewindespindel 6. Der zweite Elektromotor 28b dient als Antrieb für die rotatorische Stellbewegung der Lenkwelle 8. Wie insbesondere anhand der Fig. 2 und 3 ersichtlich ist, sind die beiden Elektromotoren 28a, 28b an einer selben Seite des Antriebsteils 2 angeordnet. Vorliegend ist eine gemeinsame Anordnung an einer nicht näher bezeichneten, in Längsrichtung X des Hubwagens 1 hinten liegenden Hinterseite des Antriebsteils 2 vorgesehen. Eine solche Anordnung erlaubt eine kompakte Bauweise in Querrichtung Y und Hochrichtung Z. In der anhand Fig. 1 gezeigten Konfiguration sind die beiden Elektromotoren 28a, 28b mittels einer Abdeckung A abgedeckt.

Die beiden Elektromotoren 28a, 28b sind baugleich. D. h. die beiden Elektromotoren 28a, 28b sind technisch identisch, so dass beispielsweise der erste Elektromotor 28a gegen den zweiten Elektromotor 28b ausgetauscht werden kann und umgekehrt. Hierdurch kann die Anzahl erforderlicher unterschiedlicher Bauteile weiter verringert werden. Zur Montage des jeweiligen Elektromotors weisen die beiden Gehäuse 24a, 24b jeweils eine Flanschfläche Fa, Fb auf, die mit einem identischen Lochbild versehen sind. Die beiden Flanschflächen Fa, Fb sind an einem nicht näher bezeichneten Deckel des jeweiligen Gehäuses 24a, 24b ausgebildet.

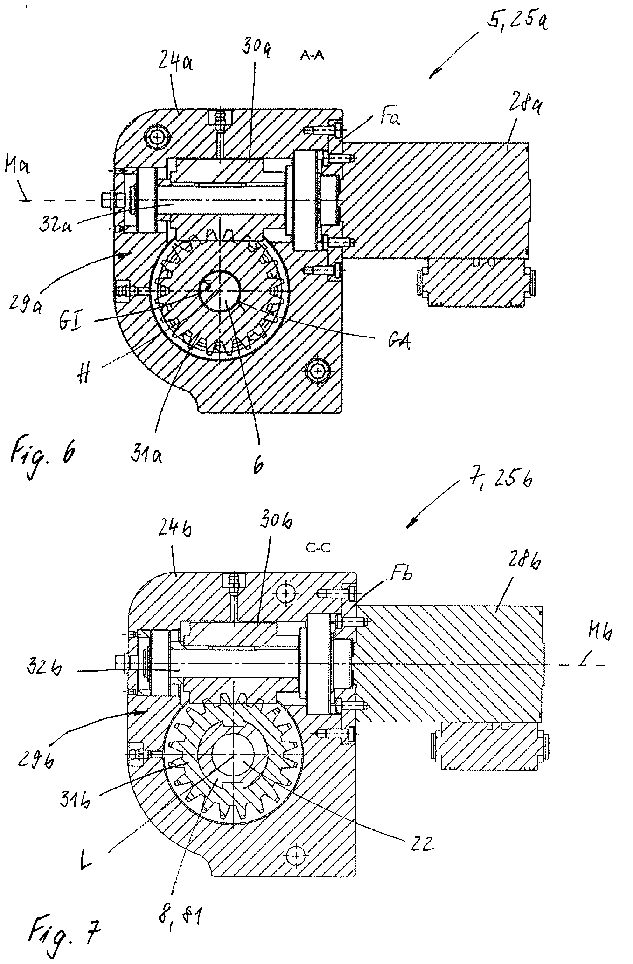

Bei der gezeigten Ausführungsform weist die Hubeinrichtung 5 ein der Gewindespindel 6 vorgeschaltetes erstes Schneckengetriebe 29a auf und die Lenkeinrichtung 7 weist ein der Lenkwelle 8 vorgeschaltetes zweites Schneckengetriebe 29b auf. Insbesondere anhand der Fig. 5, 6, 7 ist leicht ersichtlich, dass die beiden Schneckengetriebe 29a, 29b im Wesentlichen baugleich sind.

Das erste Schneckengetriebe 29a weist eine erste Schneckenwelle 30a und ein erstes Schneckenrad 31a auf.

Die erste Schneckenwelle 30a ist drehmomentfest mit dem ersten Elektromotor 28a verbunden. Zu diesem Zweck ist die erste Schneckenwelle 30a mittels einer nicht näher bezeichneten Passfederverbindung mit einer Motorwelle 32a des ersten Elektromotors 28a zusammengefügt. Die erste Schneckenwelle 30a ist gemeinsam mit der Motorwelle 32a, die auch als erste Motorwelle 32a bezeichnet werden kann, um eine erste Motorachse Ma drehbeweglich in dem ersten Gehäuse 24a gelagert. Zur Lagerung sind nicht näher bezeichnete Lagerelemente vorgesehen.

Das erste Schneckenrad 31a weist ein als Bewegungsgewinde gestaltetes Innengewinde Gl auf, das gewindebeweglich mit einem komplementären Außengewinde GA der Gewindespindel 6 zusammenwirkt. Das Innengewinde Gl und das Außengewinde GA sind in den vorliegenden Figuren aus zeichnerischen Gründen nicht im Detail dargestellt. Das erste Schneckenrad 31a fungiert insoweit als translatorisch feststehend gelagerte Spindelmutter für die Gewindespindel 6. Das erste Schneckenrad 31a ist mittels nicht näher bezeichneter Lagerelemente um die Hubachse H rotatorisch beweglich und entlang der Hubachse H translatorisch feststehend in dem ersten Gehäuse 24a gelagert.

Das zweite Schneckengetriebe 29b weist eine zweite Schneckenwelle 30b und ein zweites Schneckenrad 31b auf.

Die zweite Schneckenwelle 30b ist drehmomentfest mit dem zweiten Elektromotor 28b wirkverbunden. Hierfür ist das zweite Schneckenrad 30b mittels einer nicht näher bezeichneten Passfederverbindung mit einer Motorwelle 32b verbunden, die auch als zweite Motorwelle 32b bezeichnet werden kann. Die zweite Motorwelle 32b ist entlang einer zweiten Motorachse Mb längserstreckt.

Das zweite Schneckenrad 31b ist koaxial zu der Lenkwelle 8 orientiert und drehmomentfest mit der Lenkwelle 8 verbunden. Bei der gezeigten Ausführungsform ist die Lenkwelle 8 mehrteilig ausgeführt, was als rein exemplarisch aufzufassen ist. Dabei weist die Lenkwelle 8 vorliegend einen ersten Wellenabschnitt 81 und einen zweiten Wellenabschnitt 82 auf, die mittels einer nicht näher bezeichneten Formschlussverbindung um die Lenkachse L drehmomentfest zusammengefügt sind. Der erste Wellenabschnitt 81 ist mittels einer nicht näher bezeichneten Passfederverbindung drehmomentfest mit dem zweiten Schneckenrad 31b zusammengefügt. Der zweite Wellenabschnitt 82 weist an seinem unteren Stirnende den Zapfen 19 auf. Der erste Wellenabschnitt 81 weist die Aufnahmeaussparung 22 auf. Die Aufnahmeaussparung 22 ist koaxial zu der Lenkachse L und damit auch zu der Hubachse H in die Lenkwelle 8, genauer: den ersten Wellenabschnitt 81, eingebracht. Die Lenkwelle 8 ist gemeinsam mit dem zweiten Schneckenrad 31b um die Lenkachse L rotatorisch beweglich und entlang der Lenkachse L translatorisch feststehend in dem zweitem Gehäuse 24b gelagert. Hierfür sind nicht näher bezeichnete Lagerelemente vorgesehen.

Im Übrigen versteht sich, dass die jeweilige Verzahnungsgeometrie der ersten Schneckenwelle 30a und der zweiten Schneckenwelle 30b allein aus zeichnerischen Gründen nicht in den Figuren dargestellt ist. Insoweit sind die Figuren als schematisch vereinfacht aufzufassen. Bei der gezeigten Ausführungsform sind die erste Schneckenwelle 30a und die zweite Schneckenwelle 30b hinsichtlich ihrer Verzahnungsparameter und auch im Übrigen identisch. Entsprechendes gilt sinngemäß für die konstruktive Umsetzung der Lagerung der Schneckenwellen 30a, 30b in dem jeweiligen Gehäuse 24a, 24b und die hierfür verwendeten Lagerelemente.

Das erste Schneckenrad 31a und das zweite Schneckenrad 31b sind wenigstens im Hinblick auf ihre Verzahnungsparameter identisch. Lediglich im Hinblick auf die Gestaltung des Innenumfangs des jeweiligen Schneckenrads 31a, 31b bestehen Unterschiede.

Insbesondere anhand Fig. 5 ist gezeigt, dass die erste Motorachse Ma und die zweite Motorachse Mb parallel orientiert sind. Parallel orientiert sind zudem die erste Motorwelle 32a und die zweite Motorwelle 32b und damit auch die erste Schneckenwelle 30a und die zweite Schneckenwelle 30b. Das erste Schneckenrad 31a und das zweite Schneckenrad 32b sind koaxial orientiert.

Bei der gezeigten Ausführungsform weist der Hubwagen 1 zudem eine an dem Antriebsteil 2 angeordnete Batterie B auf (siehe Fig. 1). Die Batterie B ist unter der Abdeckung A verborgen und zur Versorgung der Hubeinrichtung 5 und der Lenkeinrichtung 7 mit elektrischer Betriebsenergie eingerichtet. Die Batterie B ist auf zeichnerisch nicht näher dargestellte Weise an der Grundplatte 12 montiert.

Zudem weist der Hubwagen 1 vorliegend eine Steuereinrichtung S auf. Diese ist ebenfalls unter der Abdeckung A verborgen. Die Steuereinrichtung S ist zum Empfangen von Steuersignalen eingerichtet, die beispielsweise ausgehend von einer Steuerzentrale an den Hubwagen 1 übermittelt werden können. Die Übermittlung erfolgt vorliegend drahtlos. Weiter ist die Steuereinrichtung S zum Ansteuern der Hubeinrichtung 5 und der Lenkeinrichtung 7 in Abhängigkeit der empfangenen Steuersignale eingerichtet.

Bei der gezeigten Ausführungsform weist der Hubwagen 1 zudem einen Nabenmotor N auf, der in die Lenkrolle 4 integriert ist. Der Nabenmotor N dient als Fahrantrieb und wirkt auf den Rollenkörper 20. Mittels des Nabenmotors N kann der Hubwagen 1 selbstfahrend betrieben werden. Dabei ist der Nabenmotor N zwecks Versorgung mit elektrischer Betriebsenergie an die Batterie B angeschlossen. Zur Ansteuerung des Nabenmotors M dient vorliegend die Steuereinrichtung S.

## Patentansprüche

1. Hubwagen (1), aufweisend
einen Antriebsteil (2) mit einer um eine vertikale Lenkachse (L) schwenkbeweglichen Lenkrolle (4),
einen relativ zu dem Antriebsteil (2) entlang einer vertikalen Hubachse (H) hubbeweglichen Lastteil (3),
und aufweisend eine an dem Antriebsteil (2) angeordnete elektrisch betriebene Hubeinrichtung (5) mit einer rotatorisch um und/oder translatorisch entlang der Hubachse (H) stellbeweglichen Gewindespindel (6), die zur Hubbewegung des Lastteils (3) mit demselben wirkverbunden ist,
wobei eine elektrisch betriebene Lenkeinrichtung (7) an dem Antriebsteil (2) angeordnet ist, wobei die Lenkeinrichtung (7) eine rotatorisch um die Lenkachse (L) stellbewegliche Lenkwelle (8) aufweist, die zur Schwenkbewegung der Lenkrolle (4) mit derselben wirkverbunden ist,
**dadurch gekennzeichnet, dass** die Lenkeinrichtung (7) vertikal unterhalb der Hubeinrichtung (5) an dem Antriebsteil (2) angeordnet ist, wobei die Gewindespindel (6) und die Lenkwelle (8) koaxial orientiert sind, und wobei die Lenkwelle (8) eine nach oben offene Aufnahmeaussparung (22) aufweist, in welche ein unteres Stirnende (23) der Gewindespindel (6) in unterschiedlichen translatorischen Stellpositionen der Gewindespindel (6) unterschiedlich weit eingetaucht ist.

2. Hubwagen (1) nach Anspruch 1, **dadurch gekennzeichnet, dass** die Hubeinrichtung (5) eine in und/oder an einem ersten Gehäuse (24a) vormontierte erste Baugruppe (25a) bildet, und dass die Lenkeinrichtung (7) eine in und/oder an einem zweiten Gehäuse (24b) vormontierte zweite Baugruppe (25b) bildet.

3. Hubwagen (1) nach Anspruch 2, **dadurch gekennzeichnet, dass** eine Unterseite (26a) des ersten Gehäuses (24a) auf einer Oberseite (27b) des zweiten Gehäuses (24b) abgestützt ist.

4. Hubwagen (1) nach Anspruch 2 oder 3, **dadurch gekennzeichnet, dass** das erste Gehäuse (24a) und das zweite Gehäuse (24b) wenigstens im Wesentlichen, vorzugsweise vollständig, baugleich sind.

5. Hubwagen (1) nach einem der vorhergehenden Ansprüche, **dadurch gekennzeichnet, dass** die Hubeinrichtung (5) einen ersten Elektromotor (28a) aufweist, und dass die Lenkeinrichtung (7) einen zweiten Elektromotor (28b) aufweist, wobei der erste Elektromotor (28a) und der zweite Elektromotor (28b) an einer selben Seite, vorzugsweise einer in Längsrichtung des Hubwagens (1) hinten liegenden Hinterseite, des Antriebsteils (2) angeordnet sind.

6. Hubwagen (1) nach Anspruch 5, **dadurch gekennzeichnet, dass** der erste Elektromotor (28a) und der zweite Elektromotor (28b) wenigstens im Wesentlichen, vorzugsweise vollständig, baugleich sind.

7. Hubwagen (1) nach einem der vorhergehenden Ansprüche, **dadurch gekennzeichnet, dass** die Hubeinrichtung (5) ein der Gewindespindel (6) vorgeschaltetes erstes Schneckengetriebe (29a) mit einer ersten Schneckenwelle (30a) und einem ersten Schneckenrad (31a) aufweist, und dass die Lenkeinrichtung (7) ein der Lenkwelle (8) vorgeschaltetes zweites Schneckengetriebe (29b) mit einer zweiten Schneckenwelle (30b) und einem zweiten Schneckenrad (31b) aufweist.

8. Hubwagen (1) nach Anspruch 7, **dadurch gekennzeichnet, dass** das erste Schneckengetriebe (29a) und das zweite Schneckengetriebe (29b) wenigstens im Wesentlichen, vorzugsweise vollständig, baugleich sind.

9. Hubwagen (1) nach Anspruch 7 oder 8, **dadurch gekennzeichnet, dass** die erste Schneckenwelle (30a) und die zweite Schneckenwelle (30b) parallel orientiert sind, und/oder dass das erste Schneckenrad (31a) und das zweite Schneckenrad (31b) koaxial orientiert sind.

10. Hubwagen (1) nach einem der Ansprüche 7 bis 9, **dadurch gekennzeichnet, dass** die erste Schneckenwelle (30a) und die zweite Schneckenwelle (30b) identische Verzahnungsparameter aufweisen, und/oder dass das erste Schneckenrad (31a) und das zweite Schneckenrad (31b) identische Verzahnungsparameter aufweisen.

11. Hubwagen (1) nach einem der Ansprüche 7 bis 10, **dadurch gekennzeichnet, dass** das erste Schneckenrad (31a) ein Innengewinde (GI) aufweist, das gewindebeweglich mit einem Außengewinde (GA) der Gewindespindel (6) zusammenwirkt.

12. Hubwagen (1) nach einem der Ansprüche 7 bis 11, **dadurch gekennzeichnet, dass** das zweite Schneckenrad (31b) und die Lenkwelle (8) koaxial orientiert und drehmomentfest miteinander wirkverbunden sind.

13. Hubwagen (1) nach einem der vorhergehenden Ansprüche, **dadurch gekennzeichnet, dass** eine Batterie (B) an dem Antriebsteil (2) angeordnet und zur Versorgung der Hubeinrichtung (5) und der Lenkeinrichtung (7) mit elektrischer Betriebsenergie eingerichtet ist.

14. Hubwagen (1) nach einem der vorhergehenden Ansprüche, **dadurch gekennzeichnet, dass** eine Steuereinrichtung (S) an dem Antriebsteil (2) angeordnet ist, wobei die Steuereinrichtung (S) zum Empfangen von Steuersignalen eingerichtet ist, und wobei die Steuereinrichtung (S) zum Ansteuern der Hubeinrichtung (5) und der Lenkeinrichtung (7) in Abhängigkeit der empfangenen Steuersignale eingerichtet ist, und/oder dass die Lenkrolle (4) mit einem Nabenmotor (N) versehen ist, insbesondere wobei der Nabenmotor (N) mittels der Batterie (B) mit elektrischer Betriebsenergie versorgt und/oder mittels der Steuereinrichtung (S) angesteuert ist.

## Claims

1. A lift truck (1), having
a driving part (2) with a steered wheel (4) swivelably movable about a vertical steering axis (L),
a loading part (3) liftably movable along a vertical lifting axis (H) relative to the driving part (2),
and an electrically operated lifting device (5) arranged on the driving part (2) with a threaded spindle (6) which is adjustably movable rotationally about and/or translationally along the lifting axis (H) and operatively connected to the loading part (3) for a lifting movement thereof,
wherein an electrically operated steering device (7) is arranged on the driving part (2), wherein said steering device (7) has a steering shaft (8) which is adjustably movable rotationally about the steering axis (L) and operatively connected to the steered wheel (4) for a swivel movement thereof,
**characterized in that** the steering device (7) is arranged on the driving part (2) vertically underneath the lifting device (5), wherein the threaded spindle (6) and the steering shaft (8) are coaxially oriented and wherein the steering shaft (8) has a receiving recess (22) open to the top, into which a lower front end (23) of the threaded spindle (6) is inserted to differing depths in differing translational adjustment positions of the threaded spindle (6).

2. The lift truck (1) according to claim 1, **characterized in that** the lifting device (5) forms a first assembly (25a) preassembled inside and/or on a first housing (24a) and **in that** the steering device (7) forms a second assembly (25b) preassembled inside and/or on a second housing (24b).

3. The lift truck (1) according to claim 2, **characterized in that** an underside (26a) of the first housing (24a) is supported on an upper side (27b) of the second housing (24b).

4. The lift truck (1) according to claim 2 or 3, **characterized in that** the first housing (24a) and the second housing (24b) are at least substantially, preferably completely, identical.

5. The lift truck (1) according to any of the preceding claims, **characterized in that** the lifting device (5) has a first electric motor (28a) and **in that** the steering device (7) has a second electric motor (28b), wherein the first electric motor (28a) and the second electric motor (28b) are arranged on a same side of the driving part (2), preferably on a rear side of the driving part (2) situated at the rear in the longitudinal direction of the lift truck (1).

6. The lift truck (1) according to claim 5, **characterized in that** the first electric motor (28a) and the second electric motor (28b) are at least substantially, preferably completely, identical.

7. The lift truck (1) according to any of the preceding claims, **characterized in that** the lifting device (5) has a first worm gear (29a) connected in front of the threaded spindle (6) with a first worm shaft (30a) and with a first worm wheel (31a) and **in that** the steering device (7) has a second worm gear (29b) connected in front of the steering shaft (8) with a second worm shaft (30b) and with a second worm wheel (31b).

8. The lift truck (1) according to claim 7, **characterized in that** the first worm gear (29a) and the second worm gear (29b) are at least substantially, preferably completely, identical.

9. The lift truck (1) according to claim 7 or 8, **characterized in that** the first worm shaft (30a) and the second worm shaft (30b) are oriented parallel and/or **in that** the first worm wheel (31a) and the second worm wheel (31b) are oriented coaxially.

10. The lift truck (1) according to any of claims 7 to 9, **characterized in that** the first worm shaft (30a) and the second worm shaft (30b) have identical gearing parameters and/or **in that** the first worm wheel (31a) and the second worm wheel (31b) have identical gearing parameters.

11. The lift truck (1) according to any of claims 7 to 10, **characterized in that** the first worm wheel (31a) has an internal thread (GI) which interacts with an external thread (GA) of the threaded spindle (6) so as to permit movement via the thread.

12. The lift truck (1) according to any of claims 7 to 11, **characterized in that** the second worm wheel (31b) and the steering shaft (8) are coaxially oriented and operatively connected to one another with a fixed torque.

13. The lift truck (1) according to any of the preceding claims, **characterized in that** a battery (B) is arranged on the driving part (2) and is configured to supply the lifting device (5) and the steering device (7) with electrical operating energy.

14. The lift truck (1) according to any of the preceding claims, **characterized in that** a control unit (S) is arranged on the driving part (2), wherein the control unit (S) is configured to receive control signals and wherein the control unit (S) is configured to control the lifting device (5) and the steering device (7) depending on the received control signals, and/or in that the steered wheel (4) is provided with a hub motor (N), in particular wherein said hub motor (N) is supplied with electrical operating energy by means of the battery (B) and/or is controlled by means of the control unit (S).

## Revendications

1. Chariot élévateur (1), présentant
un élément d'entraînement (2) avec un galet-guide (4) pouvant pivoter autour d'un axe de direction (L) vertical,
un élément de chargement (3) mobile en levée le long d'un axe de levée vertical (H) par rapport à l'élément d'entraînement (2),
et présentant un dispositif de levée (5) entraîné électriquement, disposé sur l'élément d'entraînement (2) avec une broche filetée (6) mobile pour le réglage, par rotation autour et/ou translation le long d'un axe de levée (H), laquelle est en liaison active avec l'élément de chargement (3) pour le mouvement de levée de celui-ci,
sachant qu'un dispositif de direction (7) entraîné électriquement est disposé sur l'élément d'entraînement (2), sachant que le dispositif de direction (7) présente un arbre de direction (8) mobile pour le réglage, par rotation autour de l'axe de direction (L), qui est en liaison active avec le galet-guide (4) pour le mouvement de pivotement de celui-ci,
**caractérisé en ce que** le dispositif de direction (7) est disposé verticalement en-dessous du dispositif de levée (5) sur l'élément d'entraînement (2), sachant que la broche filetée (6) et l'arbre de direction (8) sont orientés coaxialement, et sachant que l'arbre de direction (8) présente une cavité de réception (22) ouverte vers le haut dans laquelle est insérée à des profondeurs variées une extrémité avant inférieure (23) de la broche filetée (6) dans différentes positions de réglage translatoires de la broche filetée (6).

2. Chariot élévateur (1) selon la revendication 1, **caractérisé en ce que** le dispositif de levée (5) forme un premier module (25a) prémonté dans et/ou sur un premier boîtier (24a), et que le dispositif de direction (7) forme un second module (25b) prémonté sur le second boîtier (24b).

3. Chariot élévateur (1) selon la revendication 2, **caractérisé en ce qu'**une face inférieure (26a) du premier boîtier (24a) est appuyée sur une face supérieure (27b) du second boîtier (24b).

4. Chariot élévateur (1) selon la revendication 2 ou 3, **caractérisé en ce que** le premier boîtier (24a) et le second boîtier (24b) sont au moins essentiellement, de préférence complètement, de construction identique.

5. Chariot élévateur (1) selon l'une des revendications précédentes, **caractérisé en ce que** le dispositif de levée (5) présente un premier moteur électrique (28a), et que le dispositif de direction (7) présente une second moteur électrique (28b), sachant que le premier moteur électrique (28a) et le second moteur électrique (28b) sont disposés sur un même côté, de préférence sur un côté arrière, situé à l'arrière dans le sens longitudinal du chariot élévateur (1), de l'élément d'entraînement (2).

6. Chariot élévateur (1) selon la revendication 5, **caractérisé en ce que** le premier moteur électrique (28a) et le second moteur électrique (28b) sont au moins essentiellement, de préférence complètement, de construction identique.

7. Chariot élévateur (1) selon l'une des revendications précédentes, **caractérisé en ce que** le dispositif de levée (5) présente un premier engrenage à vis sans fin (29a) en amont de la broche filetée (6) avec un premier arbre de vis sans fin (30a) et une première roue tangente (31a), et que le dispositif de direction (7) présente un second engrenage à vis sans fin (29b) en amont de l'arbre de direction (8), avec un second arbre de vis sans fin (30b) et une seconde roue tangente (31b).

8. Chariot élévateur (1) selon la revendication 7, **caractérisé en ce que** le premier engrenage à vis sans fin (29a) et le second engrenage à vis sans fin (29b) sont au moins essentiellement, de préférence complètement, de construction identique.

9. Chariot élévateur (1) selon la revendication 7 ou 8, **caractérisé en ce que** le premier arbre de vis sans fin (30a) et le second arbre de vis sans fin (30b) sont disposés parallèles et/ou que la première roue tangente (31a) et la seconde roue tangente (31b) sont orientées coaxialement.

10. Chariot élévateur (1) selon l'une des revendications 7 à 9, **caractérisé en ce que** le premier arbre de vis sans fin (30a) et le second arbre de vis sans fin (30b) présentent des paramètres d'engrènement identiques et/ou que la première roue tangente (31a) et la seconde roue tangente (31b) présentent des paramètres d'engrènement identiques.

11. Chariot élévateur (1) selon l'une des revendications 7 à 10, **caractérisé en ce que** la première roue tangente (31a) présente un filetage intérieur (Gl) qui interagit de manière mobile par filetage avec un filetage extérieur (GA) de la broche filetée (6).

12. Chariot élévateur (1) selon l'une des revendications 7 à 11, **caractérisé en ce que** la seconde roue tangente (31b) et l'arbre de direction (8) sont orientés coaxialement et en liaison active l'un avec l'autre, bloqués en couple de rotation.

13. Chariot élévateur (1) selon l'une des revendications précédentes, **caractérisé en ce qu'**une batterie (B) est disposée sur l'élément d'entraînement (2) et est configurée pour alimenter le dispositif de levée (5) et le dispositif de direction (7) en énergie électrique de fonctionnement.

14. Chariot élévateur (1) selon l'une des revendications précédentes, **caractérisé en ce qu'**un dispositif de commande (S) est disposé sur un élément d'entraînement (2), sachant que le dispositif de commande (S) est configuré pour recevoir des signaux de commande, et sachant que le dispositif de commande (S) est configuré pour piloter le dispositif de levée (5) et le dispositif de direction (7) en fonction des signaux de commande reçus, et/ou que le galet-guide (4) est pourvu d'un moteur à moyeu (N), notamment sachant que le moteur à moyeu (N) est alimenté en énergie électrique de fonctionnement au moyen de la batterie (B) et/ou est piloté au moyen du dispositif de commande (S).
